Europäisches Patentamt

European Patent Office

Office européen des brevets

(19)

(11) Veröffentlichungsnummer: **0 257 537 B1**

(12) # EUROPÄISCHE PATENTSCHRIFT

(45) Veröffentlichungstag der Patentschrift: **11.11.92**

(51) Int. Cl.⁵: **F21M 3/18**, F21M 3/12

(21) Anmeldenummer: **87112013.5**

(22) Anmeldetag: **19.08.87**

(54) **Scheinwerfer für Kraftfahrzeuge.**

(30) Priorität: **21.08.86 DE 3628421**

(43) Veröffentlichungstag der Anmeldung:
**02.03.88 Patentblatt 88/09**

(45) Bekanntmachung des Hinweises auf die
Patenterteilung:
**11.11.92 Patentblatt 92/46**

(84) Benannte Vertragsstaaten:
**DE ES FR GB IT SE**

(56) Entgegenhaltungen:
**DE-A- 2 263 132**
**DE-A- 3 601 388**
**FR-A- 2 083 154**
**US-A- 2 006 125**
**US-A- 2 463 361**

**PATENT ABSTRACTS OF JAPAN, Band 8, Nr.
152 (M-309)[1589], 14. Juli 1984; & JP-A-59 48
243 (NISSAN JIDOSHA K.K.) 19-03-1984**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Kuhn, Peter, Dr.
Smetanastrasse 11
W-8000 München 60(DE)**
Erfinder: **Deicke, Axel
Meisenweg 4
W-8011 Vaterstetten(DE)**

(74) Vertreter: **Bullwein, Fritz
Bayerische Motoren Werke Aktiengesellschaft Postfach 40 02 40 - AJ-23 Petuelring
130
W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Scheinwerfer für Kraftfahrzeuge mit einer Glühlampe, einem Reflektor, einer Blende, einer nachgeschalteten Linse und mit Mitteln zum Beeinflussen der Form des auf die Fahrbahn gelangenden Lichtstrahls.

Aus der DE-OS 21 09 506 ist eine derartiger Scheinwerfer bekannt, bei dem die Blende durch lichtempfindliche Mittel in Erwiderung auf Licht von einem entgegenkommenden Fahrzeug bewegbar ist, derart, daß progressiv ein so ausreichender Teil des projizierten Strahls ausgeblendet wird, so daß ein Blenden des Fahrers des entgegenkommenden Fahrzeugs verhindert wird. Der Scheinwerfer selbst ist als an sich bekannter Lichtprojektor ausgebildet, dessen Linse allenfalls eine minimale Brennweitenänderung vorzunehmen gestattet.

Der Erfindung liegt die Aufgabe zugrunde, einen Scheinwerfer der eingangs genannten Art zu schaffen, der eine Ausleuchtung der Fahrbahn unter den verschiedensten Bedingungen in optimaler Form und mit geringem Aufwand ermöglicht.

Die Erfindung löst diese Aufgabe dadurch, daß die Blende im Brennpunkt des Reflektors feststehend ist und daß die Linse als Linsensystem mit variablen Brennweiten ausgebildet ist, in dessen glühlampenseitigem Brennpunkt stets die Blende liegt und deren andere Brennweite entsprechend äußeren Bedingungen verändert ist.

Die Erfindung besteht im wesentlichen darin, die Linse als aus der Optik an sich bekanntes Zoom-Objektiv auszubilden. Damit ist es möglich, die unterschiedlichen äußeren Einflußbedingungen zu berücksichtigen und durch Verändern der Zoom-Einstellung eine optimierte Ausleuchtung der Fahrbahn zu erreichen. Zur Verstellung des Zoom-Objektivs sind übliche Mittel anwendbar. Dabei kann es sich beispielsweise um einen elektromotorischen Antrieb handeln, wie er aus der Kameratechnik ohne weiteres bekannt ist.

Die Einstellung des Zoom-Objektivs kann auf besonders vorteilhafte Weise mit Hilfe eines Kennfeldes vorgenommen werden. Als Einflußgrößen für das Kennfeld kann neben dem aus der eingangs genannten Druckschrift bekannten Einfluß der Beleuchtung durch ein entgegenkommendes Fahrzeug auch einer oder mehrere äußere Faktoren herangezogen werden. Dabei kann es sich beispielsweise um die Umgebungshelligkeit, die optischen Eigenschaften der Fahrbahn bzw. der Fahrzeuggeschwindigkeit handeln. Die optischen Eigenschaften der Fahrbahn zeigen sich beispielsweise in dem Reflexionsvermögen des Fahrbahnbelags, der seinerseits wiederum abhängt vom der Farbe und dem Feuchtigkeitsbelag. Ergänzend kann auch der Einfluß der atmosphärischen Bedingungen berücksichtigt werden. Beispielsweise kann Regen oder Nebel anhand des dann hohen Reflexionsgrads des ausgesandten Lichts erkannt werden.

Zur Verbesserung der seitlichen Fahrbahnausleuchtung des Scheinwerfers können zusätzlich seitliche Lichtführungsmittel zum Ausleuchten eines seitlichen Bereiches des Kraftfahrzeugs angeordnet sein. Die Blende wirkt dabei mit den Lichtführungsmitteln und dem Reflektor, daß das durch den Reflektor und die Blende begrenzte Lichtbündel zumindest annähernd vollständig auf die Lichtführungsmittel fällt. Im Gegensatz zu einem aus der DE-OS 22 63 132 bekannten Scheinwerferanordnung mit einem zusätzlichen Scheinwerfer zur seitlichen Fahrbahnausleuchtung zeichnet sich diese Ausführungsform durch minimalen Aufwand aus.

Eine Verbesserung der Ausleuchtcharakteristik gerade bei asymmetrischer Ausleuchtung kann ergänzend durch eine Blende erreicht werden, die in ihrem zentralen Bereich abgerundet ist und einen fließenden Übergang zwischen der horizontalen und der geneigten Streukante besitzt. Entsprechend dem Projektionsprinzip wird die so gebildete Ausrundung dann als abgerundeter Bogen auf die Straße projiziert. Dieser Bogen beseitigt die insbesondere psychologisch bestehende Dunkelstelle im Übergangsbereich der Hell-/Dunkel-Grenze vom horizontalen Bereich in den 15°-Abblendzwickel.

Die Erfindung ist anhand der Zeichnung weiter erläutert. Es zeigt

Fig.1 den prinzipiellen Aufbau eines Scheinwerfers gemäß der Erfindung,

Fig.2 eine Abwandlung des Scheinwerfers von Fig.1,

Fig.3 eine Draufsicht eines Kraftfahrzeugs mit zwei Scheinwerfern entpsr. Fig. 2,

Fig.4 eine weitere Abwandlung des Scheinwerfers von Fig.1,

Fig.5 ein Detail aus Fig.4,

Fig.6 den Verlauf der Fahrbahnausleuchtung mit einem Scheinwerfer gem. Fig. 4.

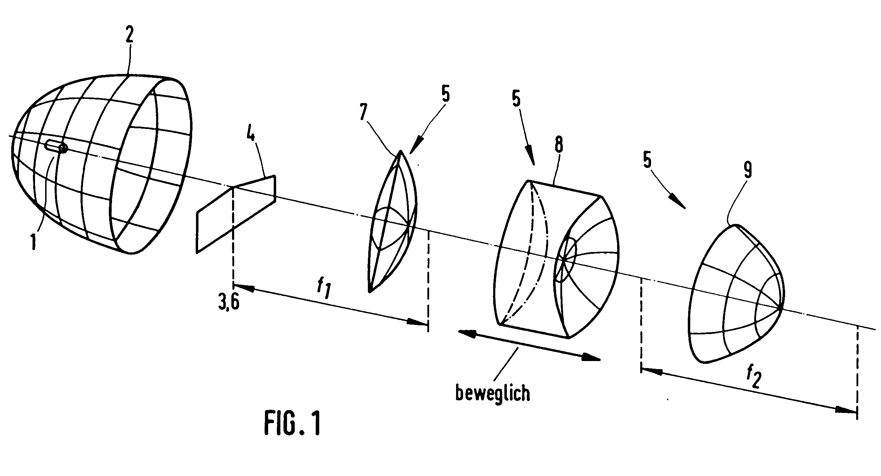

In Figur 1 ist schematisch der Aufbau eines Scheinwerfers gemäß der Erfindung dargestellt. Eine Glühlampe 1 sitzt in der Nähe eines Reflektors 2, bei dem es sich beispielsweise um ein einachsiges Ellipsoid handelt. Etwa im Brennpunkt 3 des Reflektors 2 sitzt eine Blende 4. Im Strahlengang nach der Blende 3 ist ein als Zoom-Objektiv ausgebildetes Linsensystem 5 angeordnet, in dessen glühlampenseitigem Brennpunkt 6 die Blende 4 sitzt. Das Linsensystem 5 enthält drei Linsen 7 bis 9 mit gleicher Achse, von denen die Linsen 7 und 9 feststehend und die Linse 8 axial beweglich sind. Die beiden Brennweiten $f_1$ und $f_2$ sind variabel. Zur Bewegung der Linse 8 damit zur Einstellung der variablen Brennweiten $f_1$ und $f_2$ dient ein nicht im einzelnen dargestellter elektromotorischer Antrieb.

Durch die feste Anordnung der Blende 4 im lampenseitigen Brennpunkt 6 das Linsensystem 5 ergibt sich bei variabler Einstellung der Brennweiten $f_1$ und $f_2$ eine unterschiedliche Ausleuchtung der Fahrbahn in Abhängigkeit von der Wahl der beiden Brennweiten $f_1$ und $f_2$.

Zur Einstellung der beiden Brennweiten $f_1$ und $f_2$ dient ein Kennfeld, mit dessen Hilfe der Antrieb für die Linse 8 gesteuert ist (nicht dargestellt). Das Kennfeld liefert aufgrund von Ausgangssignalen entsprechender Sensoren für die Umgebungshelligkeit, die optischen Eigenschaften der Fahrbahn, weitere atmosphärische Bedingungen (Regen) und die Fahrzeuggeschwindigkeit die Parameter für die Einstellung des Antriebs der Linse 8. Als Sensor für die Umgebungshelligkeit dient eine übliche lichtempfindliche Diode, die optischen Eigenschaften der Fahrbahn werden ebenfalls mit Hilfe einer auf diese gerichteten lichtempfindlichen Diode festgestellt. Die Fahrzeuggeschwindigkeit wird mit Hilfe eines dafür vorgesehenen Gebers erfaßt, der z.B. an der Hinterachse des KFZ's sitzt.

Die Einstellung des Objektivs 5 soll an zwei Beispielen verdeutlicht werden:
Im ersten Fall liegt eine relativ hohe Umgebungshelligkeit, nasse Fahrbahn, die atmosphärische Bedingung starken Regens und langsame Fahrt vor. In diesem Fall sind die beiden Brennweiten $f_1$ und $f_2$ so gewählt, daß die Ausleuchtung vorfeldorientiert ist.

Im anderen Fall handelt es sich um den Betrieb des Scheinwerfers bei Nacht, trockener Fahrbahn mit dunklem Belag und schneller Fahrt. In diesem Fall sind die Brennweiten $f_1$ und $f_2$ so gewählt, daß die Ausleuchtung des Fernfeldes dominiert.

Auf diese Weise ist es möglich, den Scheinwerfer stets so auszurichten, daß er eine optimale Fahrbahnausleuchtung sicherstellt.

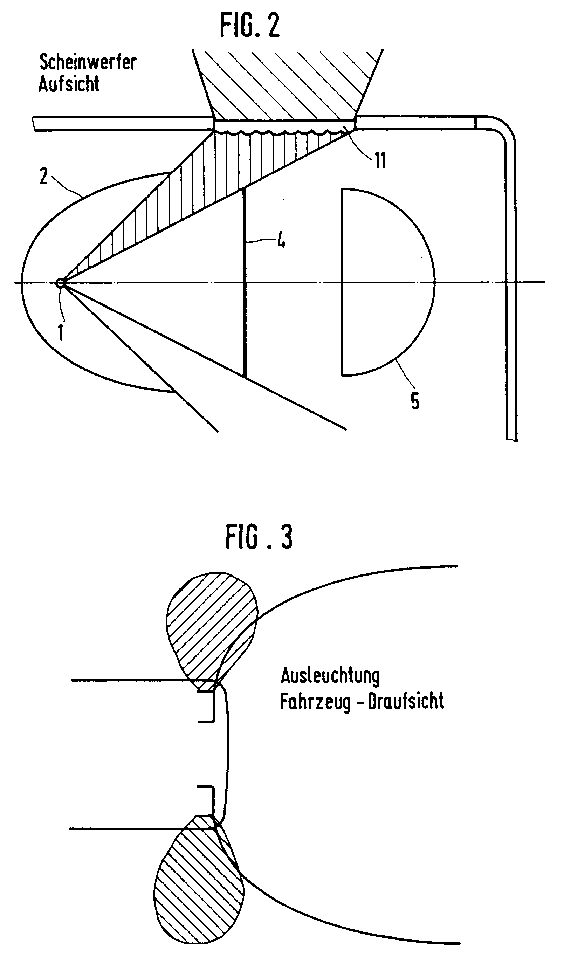

Beim Ausführungsbeispiel von Fig. 2 wirken der Reflektor 2 und die Blende 4 derart zusammen, daß ein seitliches Lichtbündel in den Randbereich des Scheinwerfers fällt. In diesem Bereich sitzen Lichtführungsmittel 11, die das auftreffende Lichtbündel in einen Seitenbereich des Kraftfahrzeugs lenken. Zusätzlich zu der durch das schematisch dargestellte Linsensystem 5 gegebenen Möglichkeit der variablen Ausleuchtung vor dem Scheinwerfer ergibt sich mit geringem zusätzlichen Aufwand somit die Möglichkeit, auch die Seitenbereiche des Kraftfahrzeugs auszuleuchten.

Diese seitliche Ausleuchtung des Kraftfahrzeugs mit Hilfe von zwei Scheinwerfern entsprechend Fig. 2 ist in Fig. 3 dargestellt.

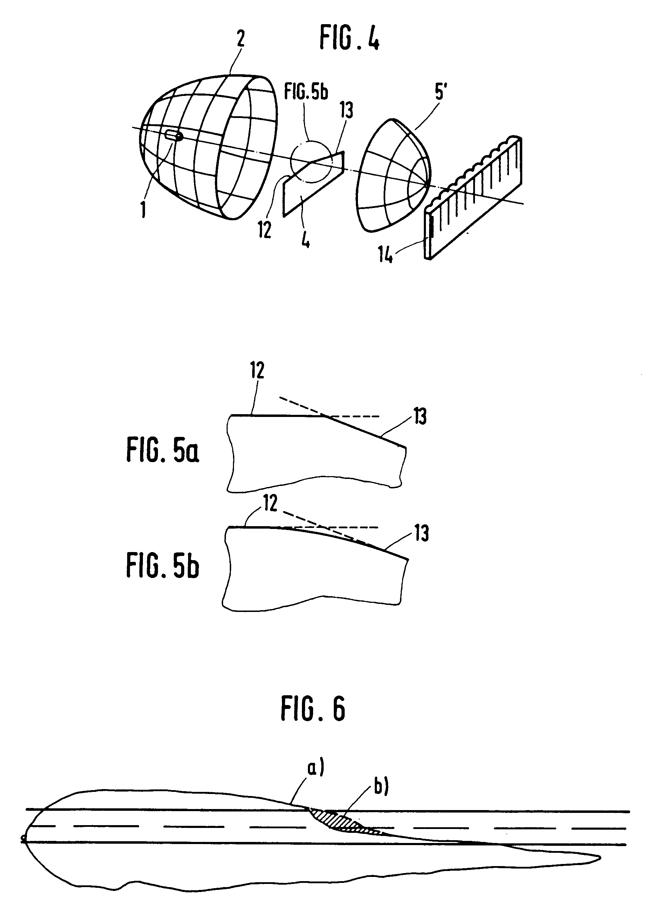

Der in Fig. 4 gezeigte Scheinwerfer unterscheidet sich gegenüber dem Scheinwerfer von Fig. 1 im wesentlichen durch die Ausgestaltung der Blende 4. Dabei sind Teile gleicher Funktion mit gleichen Bezugszeichen wie in Fig. 1 versehen. Im Gegensatz zu konventionellen Blenden mit scharfkantigem Übergang zwischen der horizontalen Streukante 12 und der schrägen Streukante 13 ist der Übergang nunmehr abgerundet. Dies ist im Detail in Fig. 5b gezeigt und der Ausbildung einer konventionellen Blende in Fig. 5a gegenübergestellt. In Fig. 4 ist das Linsensystem schematisch als Einfachlinse 5' mit nachgestellter Streuoptik 14 dargestellt.

Die Ausleuchtkurven für einen konventionellen Scheinwerfer mit scharfkantigem Übergang der beiden Streukanten und dem in Fig. 4 dargestellten Scheinwerfer ist in Fig. 6 gezeigt. Die sich in der Straßenmitte ergebende zusätzliche Ausleuchtung ist schraffiert eingezeichnet.

**Patentansprüche**

1. Scheinwerfer fur Kraftfahrzeuge mit einer Glühlampe, einem Reflektor, einer Blende, einer nachgeschalteten Linse und mit Mitteln zum Beeinflussen der Form des auf die Fahrbahn gelangenden Lichtstrahls, dadurch gekennzeichnet, daß die Blende (4) etwa in einem Brennpunkt des Reflektors (2) feststehend ist und daß die Linse als Linsensystem (5) mit variablen Brennweiten ausgebildet ist, in dessen glühlampenseitigem Brennpunkt stets die Blende (4) liegt und deren andere Brennweite entsprechend äußeren Bedingungen verändert ist.

2. Scheinwerfer nach Anspruch 1, dadurch gekennzeichnet, daß die Änderung der Brennweite mittels eines Kennfelds vorgenommen ist.

3. Scheinwerfer nach Anspruch 2, dadurch gekennzeichnet, daß die im Kennfeld enthaltenen Werte der Brennweite entsprechend der Umgebungshelligkeit, den optischen Eigenschaften der Fahrbahn und/oder der Fahrzeuggeschwindigkeit verändert sind.

4. Scheinwerfer nach einem der Ansprüche 1-3, dadurch gekennzeichnet, daß die Blende (4) mit Lichtführungsmitteln (11)zum Ausleuchten eines seitlichen Bereiches des Kraftfahrzeugs zusammenwirkt.

5. Scheinwerfer nach einem der Ansprüche 1-4, dadurch gekennzeichnet, daß die zur asymmetrischen Ausleuchtung dienende Blende (4) im mittleren Bereich ihrer Streukante abgerundet ist und einen fließenden Übergang zwischen ihrem horizontalen und ihrem schrägen Abschnitt (12,13) besitzt.

## Claims

1. A headlamp for motor vehicles with a bulb, a reflector, a shutter, a lens arranged thereafter and with means to influence the shape of the beam of light arriving on the roadway, characterised in that the shutter (4) is fixed approximately in a focal point of the reflector (2) and that the lens is constructed as a lens system (5) with variable focal lengths, in the focal point of which, on the bulb side, the shutter (4) always lies and the other focal length of which is altered according to external conditions.

2. A headlamp according to Claim 1, characterised in that the alteration of the focal length is carried out by means of a characteristic field.

3. A headlamp according to Claim 2, characterised in that the values of the focal length contained in the characteristic field are altered according to the ambient brightness, the optical characteristics of the roadway and/or the speed of the vehicle.

4. A headlamp according to any one of Claims 1-3, characterized in that the shutter (4) cooperates with light-guiding means (11) to illuminate a lateral region of the motor vehicle.

5. A headlamp according to any one of Claims 1-4, characterized in that the shutter (4) serving for the asymmetrical illumination is rounded in the central region of its scattering edge and has a progressive transition between its horizontal and its oblique section (12,13).

## Revendications

1. Projecteur pour véhicules à moteur comprenant une lampe à incandescence, un réflecteur, un diaphragme, une lentille branchée à la suite et des moyens pour influencer la forme du rayon lumineux arrivant sur la chaussée, caractérisé en ce que le diaphragme (4) est fixé au foyer du réflecteur (2) et en ce que la lentille est réalisée en système de lentilles (5) avec des distances focales variables, au foyer duquel côté lampe à incandescence, est toujours situé le diaphragme (4) et dont l'autre distance focale est modifiée conformément aux conditions extérieures.

2. Projecteur selon la revendication 1, caractérisé en ce que la variation de la distance focale se fait au moyen d'un champ caractéristique.

3. Projecteur selon la revendication 2, caractérisé en ce que les valeurs de la distance focale contenues dans le champ caractéristique sont modifiées conformément à la clarté environnante aux propriétés optiques de la chaussée et/ou à la vitesse du véhicule.

4. Projecteur selon l'une des revendications 1 à 3, caractérisé en ce que le diaphragme (4) agit avec les moyens de guidage de la lumière (11) pour éclairer une zone latérale du véhicule à moteur.

5. Projecteur selon l'une des revendications 1 à 4, caractérisé en ce que le diaphragme (4) servant à l'éclairage asymétrique, est arrondi dans la zone centrale de son arête de diffusion et a une transition courante entre son tronçon horizontal et son tronçon incliné (12, 13).

FIG.1

## FIG. 2

Scheinwerfer
Aufsicht

2

1

11

4

5

## FIG . 3

Ausleuchtung
Fahrzeug - Draufsicht

FIG. 4

FIG.5b

2

13

5'

1

12

4

14

FIG. 5a

12

13

FIG. 5b

12

13

FIG. 6

a)

b)